(19) Europäisches Patentamt
European Patent Office
Office européen des brevets

(11) **EP 2 249 173 A1**

(12) **EUROPEAN PATENT APPLICATION**

(43) Date of publication:
**10.11.2010 Bulletin 2010/45**

(51) Int Cl.:
*G01S 7/03* (2006.01)    *G01S 13/44* (2006.01)

(21) Application number: **09251279.7**

(22) Date of filing: **08.05.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **MBDA UK LIMITED**<br>Stevenage,<br>Hertfordshire SG1 2DA (GB) | (72) Inventor: **The designation of the inventor has not yet been filed**<br><br>(74) Representative: **BAE SYSTEMS plc**<br>**Group IP Department**<br>**P.O. Box 87**<br>**Warwick House**<br>**Farnborough Aerospace Centre**<br>**Farnborough**<br>**Hampshire GU14 6YU (GB)** |

(54) **Radar apparatus with amplifier duplexer**

(57)    An amplifier/duplexer for an antenna channel of a radar apparatus, comprises a first hybrid junction having two input/output ports for connection into the antenna channel, and two further ports each connected to a parallel combination comprising an amplifier and switching means switchable between a transmit condition in which it presents an open circuit and a receive condition in which it presents a short circuit so that a signal received in the antenna channel is applied to one of the input/output ports and reflected to the other input/output port each amplifier having an input connected to a respective output port of a further hybrid junction, an input port of the further hybrid junction being configured to receive a signal for transmission so that when the switching means is in the transmit condition the transmission signal is amplified by the amplifiers and delivered through the first hybrid junction to the antenna channel.

FIG 3

Printed by Jouve, 75001 PARIS (FR)

EP 2 249 173 A1

**Description**

The present invention relates to active radar apparatus, especially but not exclusively a monopulse radar and in particular to a monopulse radar for use in a missile seeker.

In a monopulse radar two, four or more separate channels transmit the same RF signal at the same time but receive ground return echoes independently. The feeds are typically horn antennas for mechanical dish antennae or individual sub-arrays for phased-array antenna. In a four channel system, each feed antenna is placed within a quadrant of the antenna. In a phase comparison (or combined amplitude and phase comparison) radar the beams from the four quadrants (A, B, C, D) are fed to a monopulse comparator where the sum and difference signals in azimuth and elevation are formed as follows:

$$\Sigma = A + B + C + D$$

$$\Delta_{az} = (A + B) - (C + D)$$

$$\Delta_{el} = (A + D) - (B + C)$$

The sum and difference components are fed to the receiver where they are demodulated and processed in a known manner to provide phase error signals to the missile guidance system.

Conventionally, the signal to be transmitted is fed to the sum channel of the comparator, divided by the comparator and supplied equally to the four antenna channels. A duplexer (transmit/receive switch or circulator and limiter) is provided in the sum channel to isolate the receiver from the transmitter whilst it is transmitting if damage to the receiver or loss of transmitter power is to be avoided. However such duplexers can cause difficulties in achieving phase and amplitude tracking between the sum and difference channels in the microwave receiver.

The present invention can facilitate an architecture which avoids the need for a transmit/receive switch in the sum channel. Indeed, it can facilitate the avoidance of a comparator altogether if employed in a radar such as that described in our co-pending application filed on the same date as this application under our reference XA2142, and entitled Radar Apparatus.

The present invention can achieve this by offering an alternative means of inputting a signal to be transmitted to the antenna channels.

Thus the invention provides in one aspect an amplifier/duplexer for an antenna channel of a radar apparatus, comprising a first hybrid junction having two input/output ports for connection into the antenna channel, and two further ports each connected to a parallel combination comprising a transmission signal amplifier and switching means switchable between a transmit condition in which an amplified signal for transmission is passed to the antenna channel and a receive condition in which a signal received in the antenna channel is applied to one of the input/output ports and reflected to the other input/output port, characterised by each amplifier being configured to receive the signal for transmission other than via the sum port of a comparator and by a phase length adjuster which is disposed in the path of the transmission signal so that the amplified signal for transmission has a required phase.

The phase length adjuster may be a further hybrid junction, each amplifier having an input connected to an output port of the further hybrid junction, an input port of the further hybrid junction being configured to receive the signal for transmission so that when the switching means is in the transmit condition the transmission signal passes via different paths through the further hybrid junction to the amplifiers and is delivered through the first hybrid junction to the antenna channel.

In a further aspect the invention provides an amplifier/duplexer for an antenna channel of a radar apparatus, comprising a first hybrid junction having two input/output ports for connection into the antenna channel, and two further ports each connected to a parallel combination comprising an amplifier and switching means switchable between a transmit condition and a receive condition in which a signal received in the antenna channel is applied to one of the input/output ports and reflected to the other input/output characterised in that each amplifier has an input connected to a respective output port of a further hybrid junction, an input port of the further hybrid junction being configured to receive a signal for transmission so that when the switching means is in the transmit condition the transmission signal is amplified by the amplifiers and delivered through the first hybrid junction to the antenna channel.

In a preferred embodiment, the switching means presents an open circuit when in the transmit condition, and a short circuit when in the receive condition.

A fourth port of the said further hybrid junction may be terminated. Each amplifier may be connected between the first hybrid junction and the further hybrid junction so that the path lengths for the transmission signal from the input port of the further hybrid junction to the antenna channel are the same.

The amplifier/duplexer may be configured such that the transmission signal passes through between diagonally opposite ports of one of the hybrid junctions and through adjacent ports of the other hybrid junction.

The switch means may be a PIN diode or other controllable resistance device switchable between a first bias condition and a second bias condition.

The amplifiers may be linear amplifiers.

The invention also provides radar apparatus comprising an amplifier/duplexer as set forth above.

Thus the radar apparatus may comprise a first antenna channel and a second antenna channel each having an amplifier/duplexer as set forth above, the apparatus comprising means for supplying transmission signals to the each amplifier/duplexer via a splitter from a common source.

When the radar apparatus is a four-channel monopulse radar apparatus, each antenna channel may have an amplifier/duplexer as set forth above, the apparatus comprising means for supplying transmission signals to each of the amplifier/duplexers via cascaded splitters from a common source.

Preferably each of the said splitters provides co-phased and isolated outputs (e.g. a Wilkinson hybrid or a Magic-tee).

The invention will be described merely by way of example with reference to the accompanying drawings, wherein

Figures 1 and 2 show a prior art radar apparatus, and

Figure 3 shows a radar apparatus according to the invention,

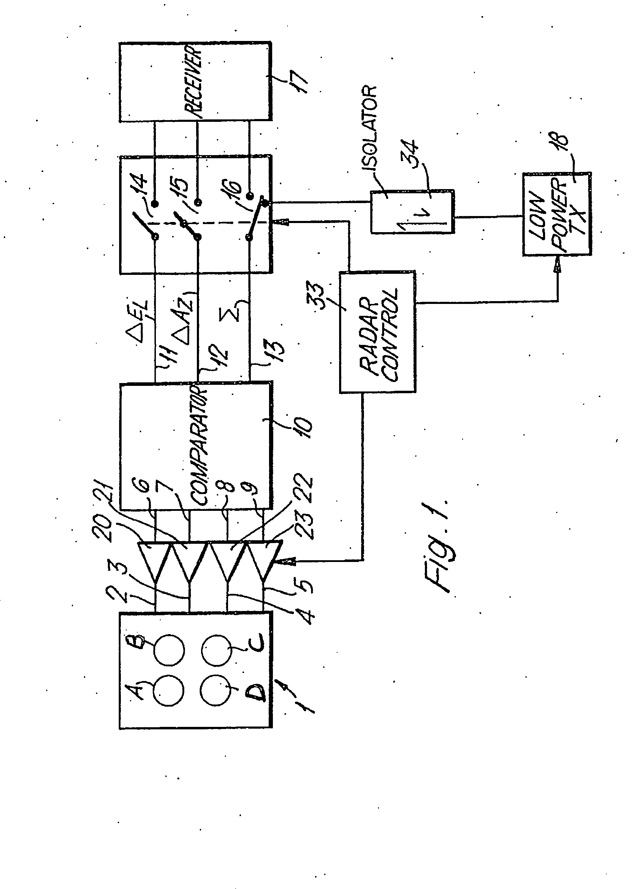

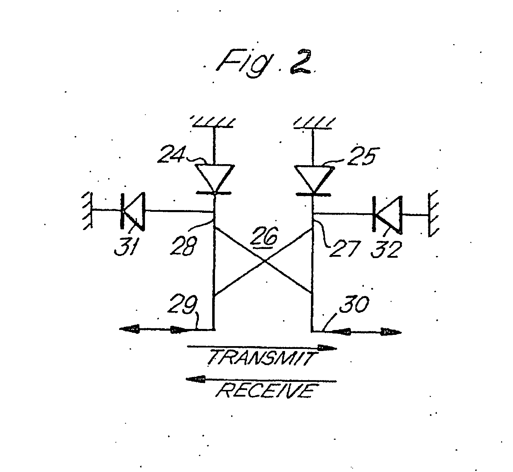

Referring to Figures 1 and 2, which are based on our earlier specification GB1605163A, an active pulse Doppler radar comprises a multi channel transmit/receive antenna system 1 having four elements A, B, C, and D respectively connected by individual antenna channels 2, 3, 4 and 6 to input terminals 6, 7, 8 and 9 of a comparator 10 in known manner. The comparator 10 is arranged to process signals received from the four antenna elements A, B, C and D and to provide an elevation difference signal $\Delta E_L$ at an output terminal 11, and azimuth difference signal $\Delta E_Z$ at an output terminal 12 and a sum signal $\Sigma$ at an output terminal 13. The difference signals $\Delta E_L$ and $\Delta E_Z$ and the sum signal $\Sigma$ are passed by way of respective blanking switches 13, 15 and 16 to a receiver 17.

The blanking switch 16 constitutes a changeover switch and is also arranged to connect a relatively low power transmitter 18 to the sum terminal 13 of the comparator 100 so that the individual elements A, B, C and D of the antenna system 1 may consequently be uniformly energised by way of the respective channels 2, 3, 4 and 5, their outputs being nominally coherent and combined in free space. Each of the channels 2, 3, 4 and 5 incorporates a respective individual output power amplifier/duplexer 20, 21, 22 and 23.

As shown in Figure 2, each of the amplifiers/duplexers 20-23 comprises a 3dB quadrature hybrid junction 26, having input/output ports 29, 30 connected in the other antenna channel 2, 3, 4 or 5. The remaining two ports 27, 28 of the junction 26 each are terminated by a parallel combination comprising a negative resistance device 24, 25 (in particular an IMPATT diode) and a PIN diode 31. The IMPATT diodes 24 and 25 are injection locked oscillators which, at the transmission frequency of the radar act as amplifiers, their power being combined in the hybrid 26.

The overall pulsed operation of the system is controlled by control means 33 which makes the various changes at each transition between transmission and reception in known manner. Thus during transmission the blanking switches 14, 15 and 16 are controlled, the transmitter 18 is pulsed, and the amplifiers/duplexers 20-23 have their IMPATT diodes suitably biased, the PIN diodes being at this time reverse biased and thus open-circuited. The signals from the transmitter 18 are applied to the input/output port 29, are incident upon the diodes 24 and 25, and are amplified and re-combined at the input/output port 30 of the hybrids 26 with some small losses due to the phase or amplitude imbalance in the hybrids 26 giving rise to reflection losses.

The amplifier/duplexers 20-23 can be expected to give a net power gain of substantially 10dB each during transmission. They must however act as reciprocal (duplexing) devices permitting the passage of return signals during reception with only minimal (e.g. 0.5dB) loss. To achieve this the ports 27, 28 are terminated during reception by a large mismatch. This is done by forward biasing the PIN diodes 31, 32 to short circuit the ports 27, 28 to ground. The IMPATT diodes can be un-biased or forward biased during reception because, due to the presence of the short circuit through the PIN diodes, their condition is unimportant, although they must not be transmitting (reverse biased).. Each PIN diode has only to withstand the power from one of the IMPATT diodes 24, 25 when it is reverse-biased (off).

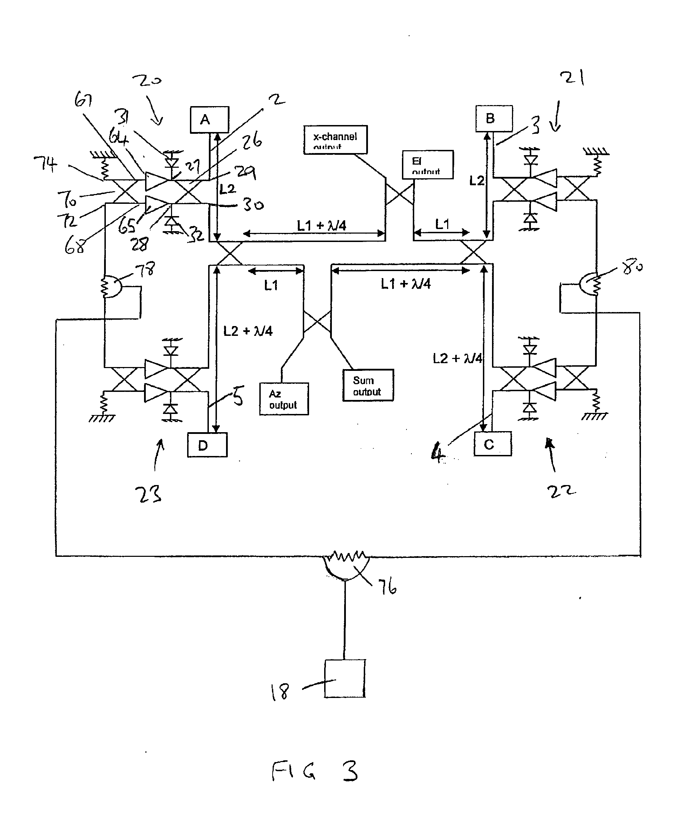

In figure 3, which shows a radar according to the invention, features already described carrying the same reference numerals as in Figures 1 and 2. The comparator 10 is expanded to show its constituent parts, namely 90° hybrid couplers 40, 42, 44, 46 connected by internal lines 48, 50, 52, 54. It will be noted that, as is conventional, lines 48 and 52 are λ/4 longer than lines 50 and 54, and that antenna channels 4 and 5 to antenna elements C and D are λ/4 longer than channels 2 and 3 to antenna elements A and B, λ being the wavelength of the transmitted signal.. The comparator 10 can also be constructed with 0°, 180° hybrids (e.g. Magic-Tee), in which case the λ/4 additional lengths of lines 48 and 52 and antenna channels 4 and 5 to antenna elements C and D are not required.

The invention differs from Figures 1 and 2 in that the signal to be transmitted is not applied via the sum port of the comparator, but is split and applied via the amplifier/duplexers 20-23. Thus in each of these units, the IMPATT diodes 24, 25 are replaced by linear amplifiers 64, 65. The inputs of the linear amplifiers are connected respectively to output ports 67, 68 of a further 3dB quadrature hybrid junction 70. Of the remaining two ports of the junction, one 72 is utilised as an input for the split transmission signal. The other 74 is loaded and terminated.

The output of the low power transmitter 18 is taken to a co-phased hybrid splitter 76 (e.g. a Wilkinson hybrid or Magic Tee), the two outputs of which are split again in further similar hybrids 78, 80. The resulting four coherent signals for transmission are applied respectively to the inputs 72 of the hybrid junction 70 in each of the amplifier/duplexers 20-23. The hybrid 70 junction acts as a phase adjuster so that the phase length of the signals through the two amplifiers 64, 65 of each amplifier/duplexer to the antenna channel is the same. For amplifier 64 the signal encounters a λ/2 phase delay in passing diagonally though the hybrid junction 70, and a λ/4 delay in passing between adjacent ports of hybrid junction 26, a total of 3λ/4. A signal passing through amplifier 65 encounters a λ/4 phase delay in junction 70 and a λ/2 delay in junction 26, again a total of 3λ / 4. Thus provided that care is taken to keep corresponding physical path lengths between the splitter 76 and the amplifier/duplexers 20-23 the same, and equally to match physical path lengths within the amplifier/duplexers, the amplified signals for transmission supplied to the antenna channels A B C D will be in phase with each other (coherent). This of course also depends on the splitters 78, 80 being matched, and on the components of each amplifier/duplexer being matched to those of the others. Dimensional matching can be facilitated by manufacturing the amplifier/duplexer as printed arrays.

In the event that phase differences do arise, the amplifiers 64, 65 can be calibrated and adjusted as described in our above-mentioned co-pending application reference XA2142, the disclosure of which is incorporated herein by reference. In the absence of such adjustment, mismatching in the amplifier stages results in energy being coupled to all receiver ports of the comparator. Hence the isolators or blanking switches 14 - 16 of Figure 1 should still be provided. However in the described embodiment they only need to withstand significantly lower power than if the full transmitter power were to be coupled via the cross-channel 56.

Failure of one of the pair of amplifiers 64, 65 is a soft failure, in that there will continue to be an output from the other one of the pair. However, power from the remaining one of the pair will be split between the antenna and whatever termination is presented by the receiver blanking. Additionally, there will be a loss of effective radiated power because the free-space combining will result in a spread of the beam (loss of gain) due to the imbalance between the quadrants. If continued but degraded operation is required, then the receiver blanking needs to be absorptive to reduce re-reflection within the feed network into the transmit stages. The reflected power to be absorbed when one amplifier fails is one sixteenth of the total power output of the transmitter.

The preferred embodiments of the invention could be well suited to a millimetric active system. The high-power circulators and isolators that are required for these wavelengths are usually quite large in comparison to other components. Pin diodes for T/R switches tend to be lower power if fast switching is required. The preferred embodiments of the invention use neither of these components in critical positions for either performance or space-envelope. There are no active components required in the transmit output path. This not only avoids the need for components to withstand high power, but also reduces the transmit losses.

Also as described in our application reference XA2142, the comparator 10 can be omitted and the $\Sigma, \Delta_{EL}$ and $\Delta_{AZ}$ processing deferred until after demodulation of the incoming RF received signal to baseband.

The preferred embodiments of the invention have the advantage of being simpler than those of GB1605163A. A further advantage is that the distributed amplification of the transmitted signal avoids the need for components having high power-handling capability.

Although as hitherto described the PIN diodes 31, 32 are biased between an off and a short-circuit (fully "on") state, it is possible to bias them in the on state so as to have a significant resistance. Then controlled attenuation of the received signal passing through the hybrid junction 26 can be provided. Instead of the signal passing substantially without loss through the junction 26, its is attenuated by an amount controlled by the proportion of the signal which is allowed to pass through the PIN diode to ground.

Also, instead of being biased by the control signal from the controller 33 (figure 2), the PIN diodes can be self-biased by rectifying the received signal, and applying it across a resistance to develop a bias current for the PIN diodes and thereby forward biasing them into their conducting state. This creates a passive limiter function.

Both of these functions (active attenuator and passive limiter) can be implemented singly or together without the need for additional components in the received signal path, and thus produce no additional unwanted RF loss

Although described in the context of a four-quadrant monopulse antenna, the amplifier/duplexer can be used with larger array antennas, since the monopulse comparator is a subset of the more general Butler matrix.

The reader also is referred to our related application reference XA2448 entitled Radar Apparatus, and filed on the same date as this application. The disclosure of that application is incorporated herein by reference.

**Claims**

1. An amplifier/duplexer for an antenna channel of a radar apparatus, comprising a first hybrid junction having two input/output ports for connection into the antenna channel, and two further ports each connected to a parallel combination comprising a transmission signal amplifier and switching means switchable between a transmit condition in which an amplified signal for transmission is passed to the antenna channel and a receive condition in which a signal received in the antenna channel is applied to one of the input/output ports and reflected to the other input/ output port **characterised by** each amplifier being configured to receive the signal for transmission other than via the sum port of a comparator and by a phase length adjuster which is disposed in the path of the transmission signal so that the amplified signal for transmission has a required phase.

2. An amplifier/duplexer as in claim 1 wherein the phase length adjuster is a further hybrid junction, each amplifier having an input connected to an output port of the further hybrid junction, an input port of the further hybrid junction being configured to receive the signal for transmission so that when the switching means is in the transmit condition the transmission signal passes via different paths through the further hybrid junction to the amplifiers and is delivered through the first hybrid junction to the antenna channel.

3. An amplifier/duplexer for an antenna channel of a radar apparatus, comprising a first hybrid junction having two input/output ports for connection into the antenna channel, and two further ports each connected to a parallel combination comprising an amplifier and switching means switchable between a transmit condition in which it presents an open circuit and a receive condition in which it presents a short circuit so that a signal received in the antenna channel is applied to one of the input/output ports and reflected to the other input/output **characterised in that** each amplifier has an input connected to a respective output port of a further hybrid junction, an input port of the further hybrid junction being configured to receive a signal for transmission so that when the switching means is in the transmit condition the transmission signal is amplified by the amplifiers and delivered through the first hybrid junction to the antenna channel.

4. An amplifier/duplexer as in claim 1, 2 or 3 wherein the switching means presents an open circuit when in the transmit condition and a short circuit when in the receive condition.

5. An amplifier/duplexer as in claim 2, 3, or 4 wherein a fourth part of the said further hybrid junction is terminated.

6. An amplifier/duplexer as in claim 2, 3, 4 or 5 wherein each amplifier is connected between the first hybrid junction and the further hybrid junction so that the path lengths for the transmission signals from the input port of the further hybrid junction to the antenna channel are the same.

7. An amplifier/duplexer as in claim 2, 3 or 4 and configured such that the transmission signal passes through between diagonally opposite ports of one of the hybrid junctions and through adjacent ports of the other hybrid junction.

8. An amplifier/duplexer as in any preceding claim wherein the switching means in a PIN diode or other controllable resistance device switchable between a first bias condition and a second bias condition.

9. An amplifier/duplexer as in any preceding claim wherein the amplifiers are linear amplifiers.

10. Radar apparatus comprising an amplifier/duplexer as in any preceding claim.

11. Radar apparatus as in claim 10, having a first antenna channel and a second antenna channel each having an amplifier/duplexer as in any preceding claim, the apparatus comprising means for supplying transmission signals to each amplifier/duplexer via a splitter from a common source.

12. Radar apparatus as in claim 10 being a four channel monopulse radar apparatus, each channel having an amplifier/ duplexer as in any of claims 1 to 9, the apparatus comprising means for supplying transmission signals to each of the amplifier/duplexer via cascaded splitters from a common source.

**13.** Radar apparatus as in claim 11 or 12 wherein a said splitter is a co-phased hybrid.

Fig.1.

EP 2 249 173 A1

Fig. 2

FIG 3

Europäisches
Patentamt

European
Patent Office

Office européen
des brevets

**EUROPEAN SEARCH REPORT**

Application Number

EP 09 25 1279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | GB 1 605 163 A (MARCONI CO LTD) 25 August 1982 (1982-08-25) | 1,3 | INV. G01S7/03 G01S13/44 |
| A | * page 2, line 5 - line 130; figures 1-4 * ----- | 2,4-13 | |
| Y | US 4 160 975 A (STEUDEL FRITZ) 10 July 1979 (1979-07-10) | 1 | |
| A | * column 2, line 44 - column 3, line 25 * * column 5, paragraph 13 - paragraph 25; figure 1 * ----- | 2 | |
| Y | US 2003/156060 A1 (REVANKAR UDAYSHANKAR KASHINATH [IN] ET AL) 21 August 2003 (2003-08-21) * paragraph [0038] - paragraph [0043]; figure 2 * ----- | 3 | |
| A | DE 35 25 778 A1 (LICENTIA GMBH [DE] DEUTSCHE AEROSPACE [DE]) 20 March 1986 (1986-03-20) * figure 1 * ----- | 1-2 | |
| A | GB 794 441 A (DECCA RECORD CO LTD) 7 May 1958 (1958-05-07) * page 2, line 97 - page 3, line 94; figures * ----- | 3-7,11 | **TECHNICAL FIELDS SEARCHED (IPC)** G01S |

The present search report has been drawn up for all claims

| Place of search | Date of completion of the search | Examiner |
|---|---|---|
| The Hague | 27 January 2010 | Devine, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

**Application Number**

EP 09 25 1279

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION
SHEET B**

Application Number

EP 09 25 1279

The Search Division considers that the present European patent application does not comply with the requirements of unity of invention and relates to several inventions or groups of inventions, namely:

1. claims: 1-2

   An amplifier/duplexer with a phase length adjuster which is disposed in the path of the transmission signal so that the amplified signal for transmission has a required phase.
   ---

2. claims: 3-13

   An amplifier/duplexer for an antenna channel of a radar apparatus, with an amplifier which has an input connected to a respective output port of a further hybrid junction, an input port of the
   further hybrid junction being configured to receive a signal for transmission so that when the switching means is in the transmit condition the transmission signal is amplified by an amplifier and
   delivered through the first hybrid junction to an antenna channel.
   ---

## ANNEX TO THE EUROPEAN SEARCH REPORT
## ON EUROPEAN PATENT APPLICATION NO.

EP 09 25 1279

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| GB 1605163 | A | 25-08-1982 | US | 4380765 A | 19-04-1983 |
| US 4160975 | A | 10-07-1979 | NONE | | |
| US 2003156060 | A1 | 21-08-2003 | CA | 2405143 A1 | 18-10-2001 |
| | | | DE | 60127662 T2 | 27-12-2007 |
| | | | EP | 1279046 A1 | 29-01-2003 |
| | | | WO | 0177706 A1 | 18-10-2001 |
| DE 3525778 | A1 | 20-03-1986 | NONE | | |
| GB 794441 | A | 07-05-1958 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1605163 A